(19) Europäisches Patentamt
European Patent Office
Office européen des brevets

(11) EP 2 893 971 A1

(12) EUROPEAN PATENT APPLICATION
published in accordance with Art. 153(4) EPC

(43) Date of publication:
**15.07.2015 Bulletin 2015/29**

(21) Application number: **13834425.4**

(22) Date of filing: **03.09.2013**

(51) Int Cl.:
***B01D 69/00*** *(2006.01)* ***B01D 69/10*** *(2006.01)*
***B01D 69/12*** *(2006.01)* ***B01D 71/70*** *(2006.01)*
***B32B 5/18*** *(2006.01)* ***B32B 23/20*** *(2006.01)*
***B32B 25/20*** *(2006.01)* ***B32B 27/00*** *(2006.01)*
***B32B 27/08*** *(2006.01)* ***B32B 27/30*** *(2006.01)*
***B32B 27/34*** *(2006.01)*

(86) International application number:
**PCT/JP2013/005213**

(87) International publication number:
**WO 2014/038187 (13.03.2014 Gazette 2014/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.09.2012 JP 2012194394**

(71) Applicant: **Nitto Denko Corporation**
**Ibaraki-shi, Osaka 567-8680 (JP)**

(72) Inventors:
- **NISHIMURA, Megumi**
  **Ibaraki-shi**
  **Osaka 567-8680 (JP)**
- **KIMURA, Naomichi**
  **Ibaraki-shi**
  **Osaka 567-8680 (JP)**

(74) Representative: **Hart-Davis, Jason et al**
**Cabinet Beau de Loménie**
**158, rue de l'Université**
**75340 Paris Cedex 07 (FR)**

# (54) SEPARATION MEMBRANE, COMPOSITE SEPARATION MEMBRANE AND PROCESS FOR PRODUCING SEPARATION MEMBRANE

(57) The separation membrane of the present invention includes: a separation function layer including a high-molecular polymer as a matrix and an amine compound represented by the formula [I] and/or [II] below; and hydrophobic layers arranged on both faces of the separation function layer. The separation function layer includes a crack inhibitor.

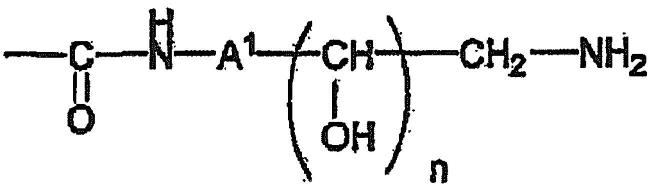

[I] ,

(In the formula, $A^1$ represents a divalent organic residue having 1 to 3 carbon atoms, and n represents an integer of 0 or 1.)

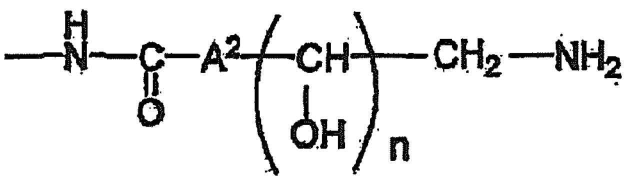

[II] ,

EP 2 893 971 A1

(In the formula, $A^2$ represents a divalent organic residue having 1 to 3 carbon atoms, and n represents an integer of 0 or 1.)

## Description

TECHNICAL FIELD

The present invention relates to a separation membrane for separating carbon dioxide from a mixed gas containing carbon dioxide, a composite separation membrane including the separation membrane, and a method for producing the separation membrane.

BACKGROUND ART

It is conventionally known that polymer materials have their specific gas permeability, and gas components can therefore be separated by a membrane made of a polymer material (see Non Patent Literature 1, for example). In particular, techniques of separating gas components by a membrane have advantages in that the energy consumed is small, the device used can be reduced in size, and the maintenance of the device is easy; therefore, such techniques are used in various fields. Recently, among the techniques of separating gas components by a membrane, a technique of selectively separating carbon dioxide has been diligently studied. This technique can be used for separating and collecting carbon dioxide from various gases such as offgas of oilfields, exhaust gas from refuse incineration or thermal power generation, and natural gas.

For example, a separation membrane is proposed which includes a porous support impregnated with a polyamidoamine dendrimer which is a liquid substance at room temperature (Non Patent Literature 2 and 3). When the separation performance of the impregnated membrane is measured by a method called helium carrier method in which no pressure difference is created in the membrane, a high value of carbon dioxide selectivity which is more than 1000 is exhibited. However, the separation membrane including a porous support impregnated with a polyamidoamine dendrimer which is a liquid substance is difficult to put into practical use because when a pressure is applied to this membrane, the impregnating dendrimer escapes out of the support over time, and the performance of the membrane cannot be maintained.

Therefore, it has been desired to develop a composite membrane in which a substance having strong selective affinity for carbon dioxide such as a polyamidoamine dendrimer is immobilized and which can be subjected to a practical level of pressure difference. For example, the proposals as described below have been made.

Patent Literature 1 proposes a composite membrane including a porous support membrane (A) and a gas separation layer formed on a surface of the porous support membrane (A), the gas separation layer being composed of: a water absorptive high-molecular material formed by crosslinking a high-molecular material (a) having an amino group and/or a hydroxyl group with a polyfunctional crosslinking agent (b); and an amine compound (c) having a specific amidoamine group.

In addition, Patent Literature 2 proposes a composite membrane composed of a polymer membrane and a porous support membrane stacked on each other, the polymer membrane being formed by immobilizing an amine compound having a specific amidoamine group in a high-molecular polymer obtained by polymerizing a polyfunctional polymerizable monomer.

However, the composite membranes of Patent Literature 1 and 2 have a problem in that if dew condensation occurs on the surface of the gas separation layer or the polymer membrane due to moisture contained in the feed gas, the water-soluble amine compound dissolves into the dew condensation water, with the result that the separation performance of the composite membrane may gradually decrease.

Patent Literature 3 proposes a carbon dioxide-concentrating membrane including: a liquid membrane including an inorganic porous support containing an ionic liquid for which the temperature for a 5% weight loss in thermogravimetry is 250°C or higher or a polymer gel formed by polymerization of the ionic liquid; and a sealing membrane that prevents permeation of the ionic liquid and for which the temperature for a 5% weight loss in thermogravimetry is 250°C or higher, the carbon dioxide-concentrating membrane having a multi-layer structure in which the liquid membrane is sandwiched between the two sealing membranes. Patent Literature 3 also states that the presence of the two sealing membranes sandwiching the liquid membrane makes it possible to prevent loss of the ionic liquid (or the polymer gel formed by polymerization of the ionic liquid).

CITATION LIST)

Patent Literature

Patent Literature 1: JP 2008-68238 A

Patent Literature 2: JP 2009-241006 A
Patent Literature 3: JP 2010-36123 A

Non Patent Literature

Non Patent Literature 1: New Developments in Gas Separation Technology, edited by Investigative Research Department, Toray Research Center Inc. and issued by Toray Research Center Inc., 1990, page 345 to page 362
Non Patent Literature 2: J. Am. Chem. Soc. 122 (2000) 7594 to 7595
Non Patent Literature 3: Ind. Eng. Chem. Res. 40 (2001) 2502 to 2511

SUMMARY OF INVENTION

Technical Problem

The present invention aims to provide a separation membrane in which the occurrence of cracks in a separation function layer is prevented and which has such a high resistance to dew condensation that an amine compound of the separation function layer is less prone to dissolution.

Solution to Problem

The present invention provides a separation membrane as presented below.
A separation membrane including:

a separation function layer including a high-molecular polymer as a matrix and an amine compound; and hydrophobic layers arranged on both faces of the separation function layer,
the separation function layer including a crack inhibitor, and
the amine compound being represented by the following formula [I] and/or [II]:

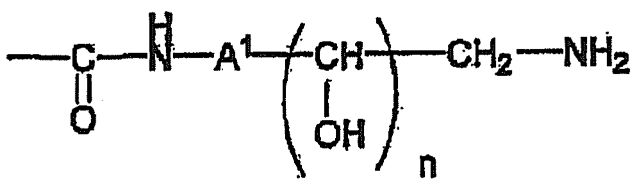

[ I ]

,

where $A^1$ represents a divalent organic residue having 1 to 3 carbon atoms, and n represents an integer of 0 or 1; and

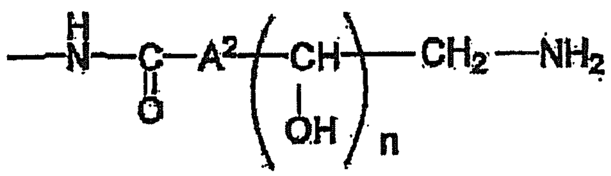

[ I I ]

,

where $A^2$ represents a divalent organic residue having 1 to 3 carbon atoms, and n represents an integer of 0 or 1.

Advantageous Effects of Invention

By arranging hydrophobic layers on both faces of a separation function layer including a high-molecular polymer as a matrix, it is possible to prevent an amine compound of the separation function layer from dissolving due to dew condensation. In addition, since a crack inhibitor is included in the separation function layer, the occurrence of cracks in the separation function layer can be prevented at the time of formation of the hydrophobic layers.

DESCRIPTION OF EMBODIMENTS

Hereinafter, embodiments of the present invention will be described. It should be noted that the present invention is not limited by the embodiments described below.

The separation membrane of the present invention includes: a separation function layer including a high-molecular polymer as a matrix (base material); and hydrophobic layers arranged on both faces of the separation function membrane. The separation function layer includes an amine compound represented by the formula [I] and/or the formula [II] below and a crack inhibitor.

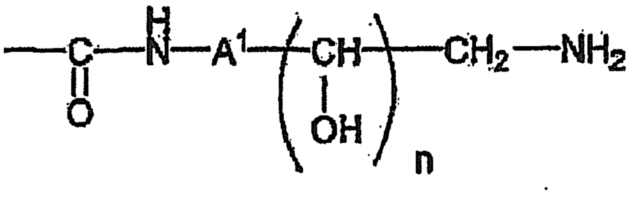

[I]

(In the formula, $A^1$ represents a divalent organic residue having 1 to 3 carbon atoms, and n represents an integer of 0 or 1.)

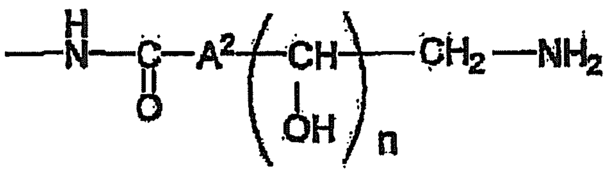

[II]

(In the formula, $A^2$ represents a divalent organic residue having 1 to 3 carbon atoms, and n represents an integer of 0 or 1.)

<Amine compound of separation function layer>

First, the amine compound included in the separation function layer will be described. The amine compound immobilized in the high-molecular polymer is an amine compound having an amidoamino group represented by the formula [I] and/or the formula [II] shown above. Examples of the divalent organic residue having 1 to 3 carbon atoms and represented by $A^1$ or $A^2$ in the formula [I] or [II] include linear or branched alkylene groups having 1 to 3 carbon atoms. Specific examples of such alkylene groups include $-CH_2-$, $-CH_2-CH_2-$, $-CH_2-CH_2-CH_2-$, and $-CH_2-CH(CH_3)-$. Among these, $-CH_2-$ is particularly preferable.

It is sufficient for the amine compound to have at least one amidoamino group represented by the formula [I] and/or [II]. The number of the amidoamino groups is not particularly limited. The number of the amidoamino groups is preferably 2 to 4096, and more preferably 3 to 128.

The mass fraction of the amidoamino group in the amine compound is not particularly limited. From the viewpoint of increasing the capacity to separate carbon dioxide and hydrogen, the mass fraction of the amidoamino group is preferably 5% or more, more preferably 10 to 94%, and even more preferably 15 to 53%.

Examples of the framework to which the amidoamino group represented by the formula [I] or [II] is bonded in the amine compound include the following ones.

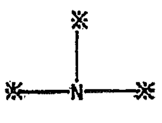

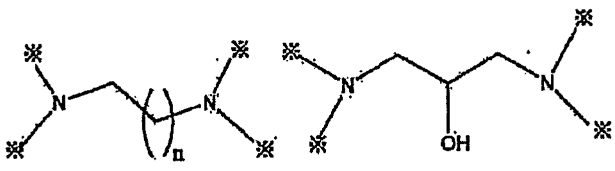

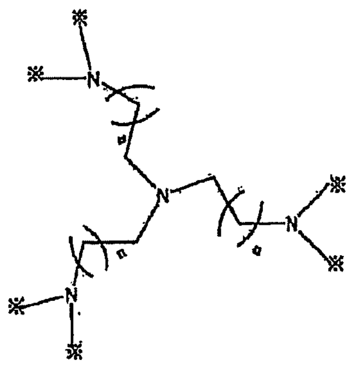

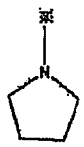
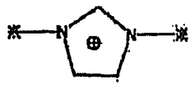
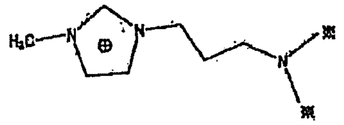

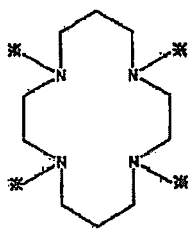
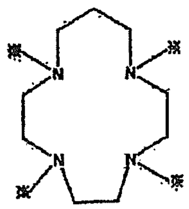
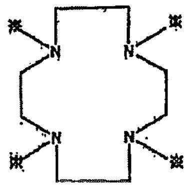

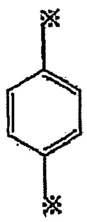
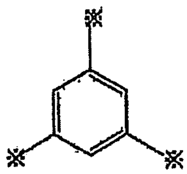
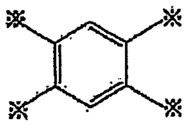
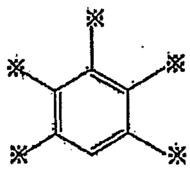
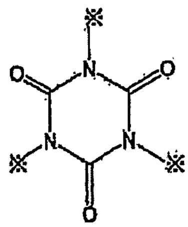

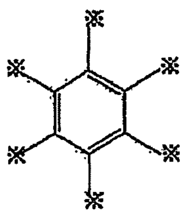
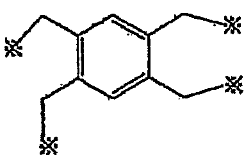
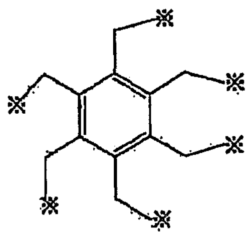

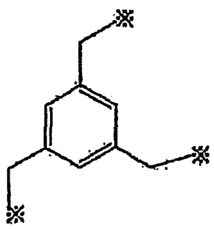
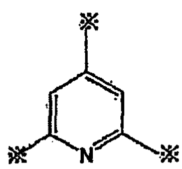
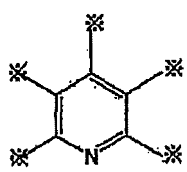
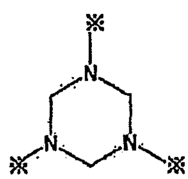

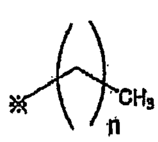
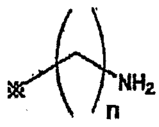
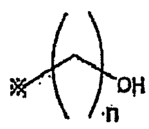

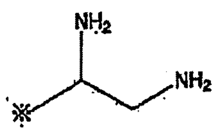
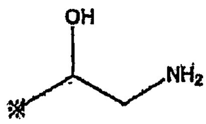
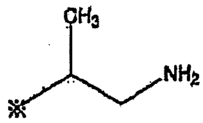

[In the formulae, n represents an integer of 0 to 10.]

That is, the amine compound used in the present invention is a compound in which the amidoamino group represented by the formula [I] or [II] is bonded, directly or via an alkylene group, at a part or all of the bonding sites represented by asterisks in the above formulae and in which a hydrogen atom, an alkyl group, an aminoalkyl group, a hydroxyalkyl group or the like is bonded to the bonding sites to which the amidoamino group is not bonded.

Examples of the amine compound include generation 0 polyamidoamine dendrimers represented by the formulae below and dendrimers of the first and subsequent generations corresponding to the generation 0 polyamidoamine dendrimers.

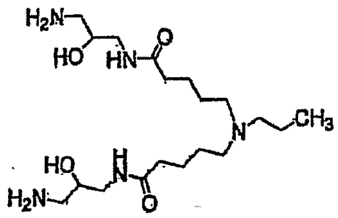
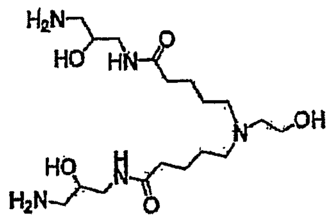

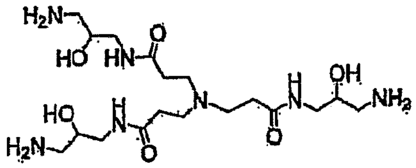
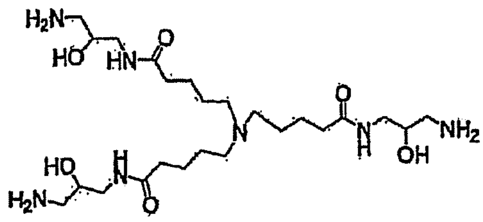

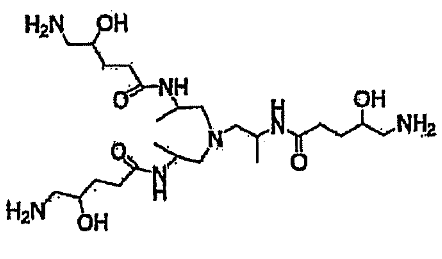
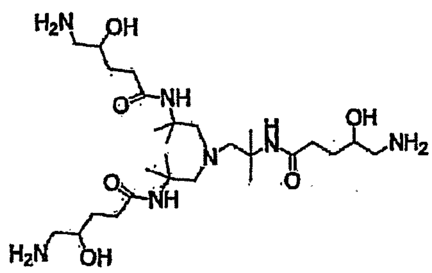

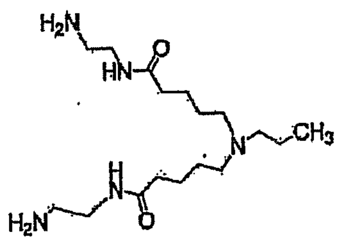
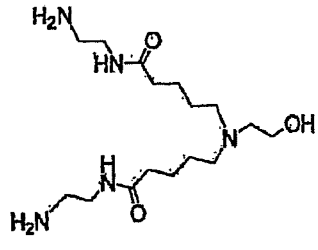

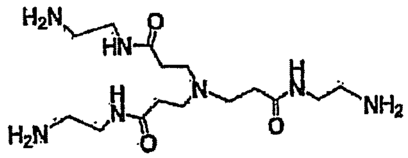

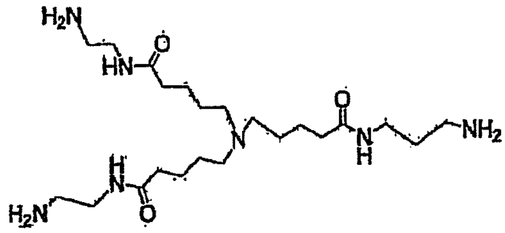

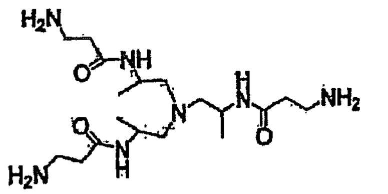

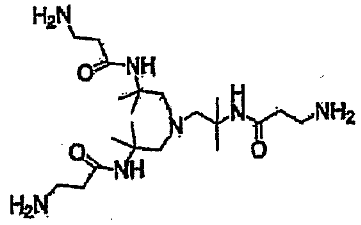

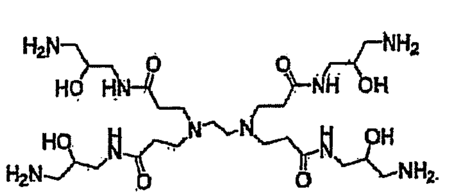

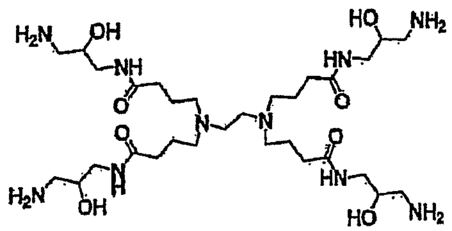

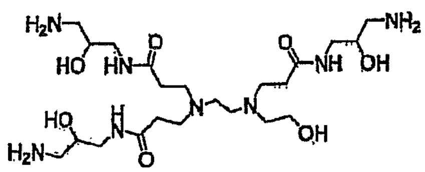

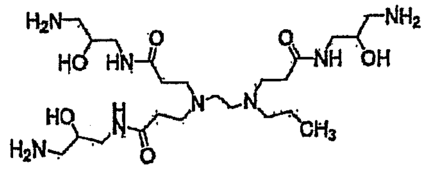

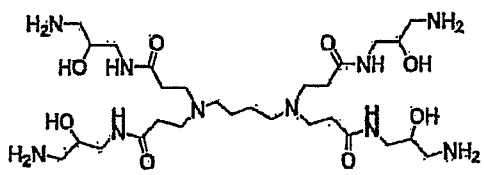

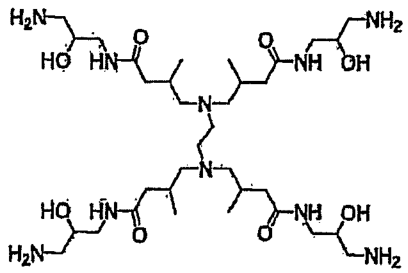

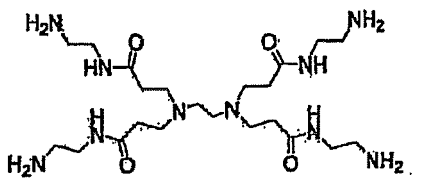

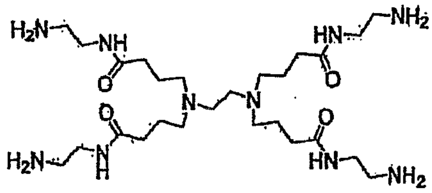

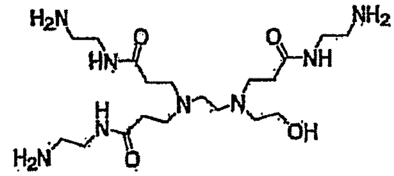

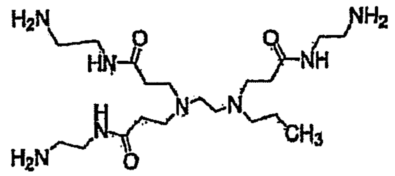

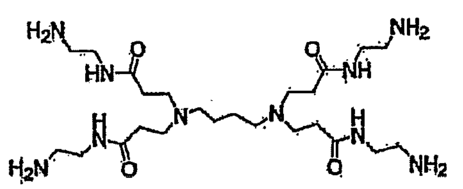

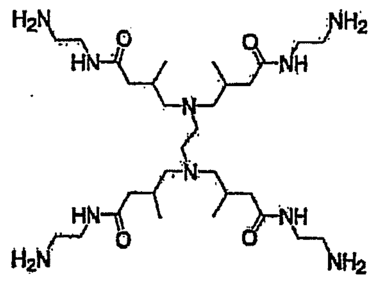

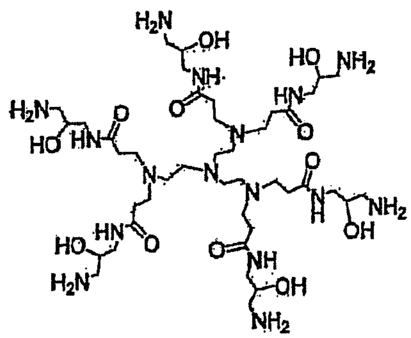

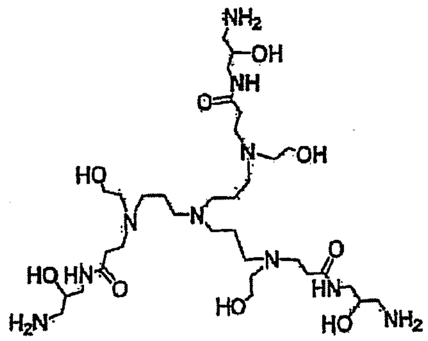

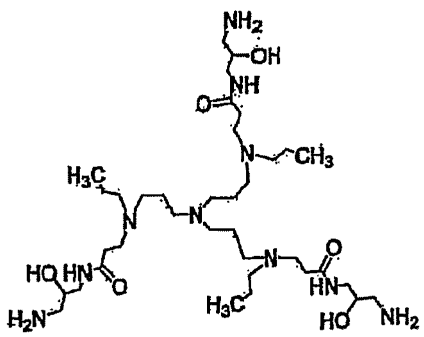

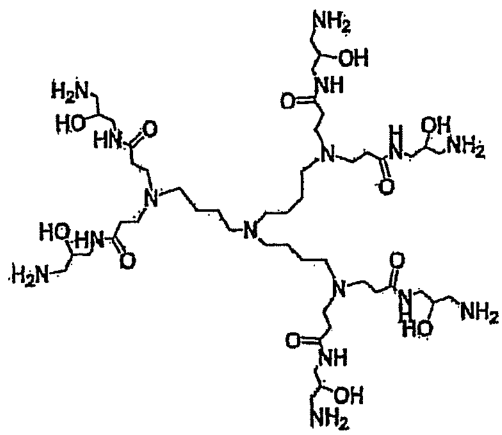

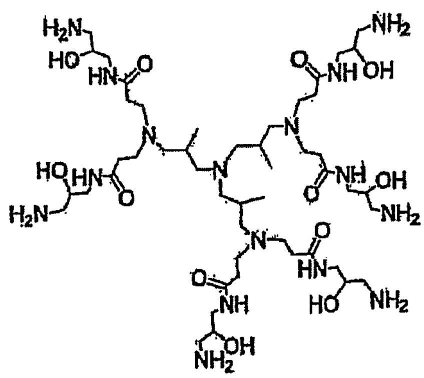

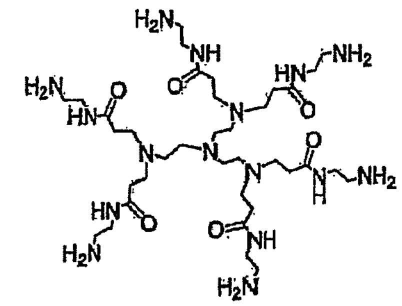
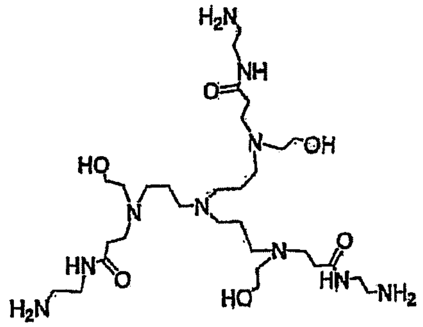

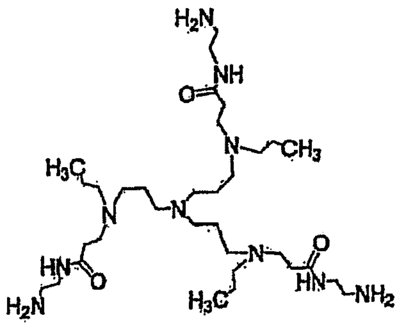
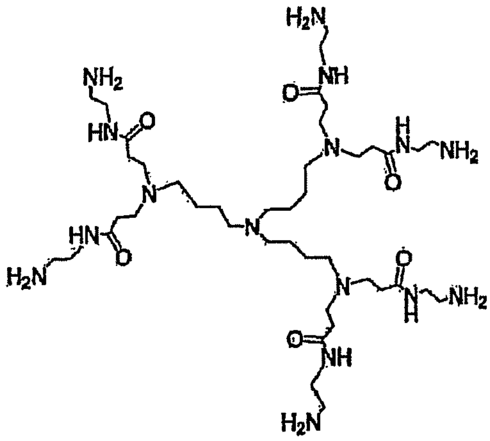

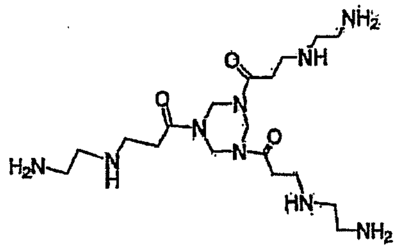
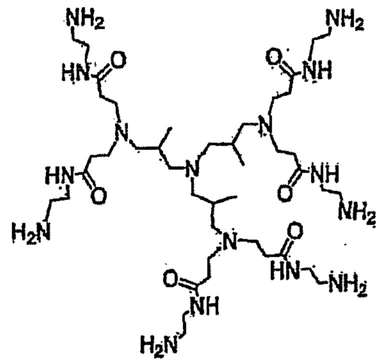

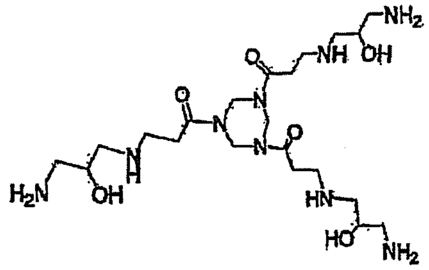
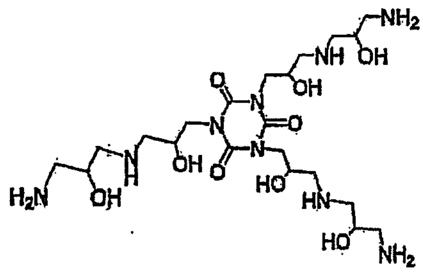

Examples of particularly suitable compounds among the above polyamidoamine dendrimers include the polyamidoamine dendrimers below.

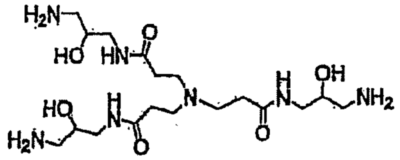

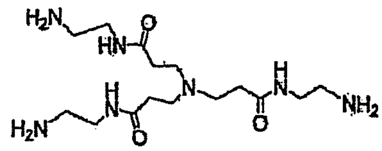

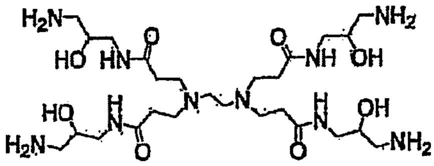

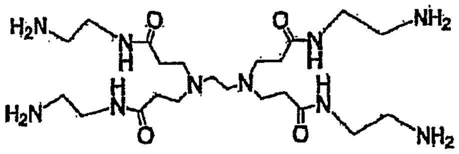

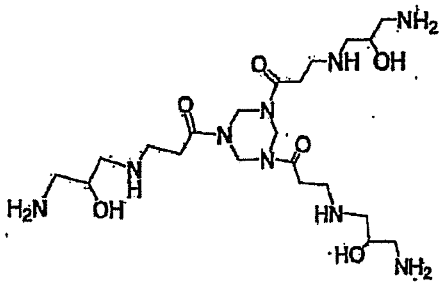

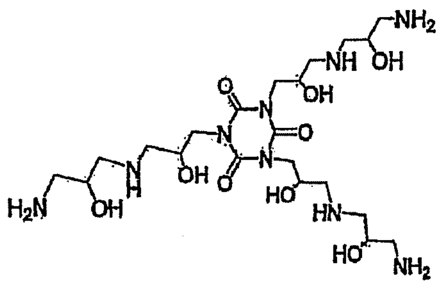

The polyamidoamine dendrimers used in the present invention include those in which all of the branches have equal lengths and those in which at least one of the branches is substituted with a hydroxyalkyl group or an alkyl group and has a different length from the other branches. In addition, various polyamidoamine dendrimers which differ in the number of surface groups (that is, amidoamine groups represented by the formula [I] or [II]) can also be used. As for the relationship between the number of the surface groups and the generation in the polyamidoamine dendrimers, the number c of the surface groups in a generation b polyamidoamine dendrimer (b represents an integer) is represented by the formula below when the number of the surface groups in a generation 0 polyamidoamine dendrimer is denoted by a (a represents an integer of 3 or more).

$$c = a \times 2^b$$

In the present invention, commercially-available products (e.g., generation 0 to 10 PAMAM dendrimers manufactured by Sigma-Aldrich Co., LLC.) can also be used; in particular, generation 0 to 5 polyamidoamine dendrimers can be suitably used.

The amine compound having the amidoamine group represented by the formula [I] can be produced according to a commonly-known organic synthesis method. An example of the synthesis method of the amine compound is a method in which a core compound having a methyl ester group is allowed to react with an amine compound represented by the formula [Ia] below. According to such a method, the methyl ester group of the core compound having the methyl ester group is converted to the amidoamine group represented by the formula [I], and thus the amine compound having the amidoamine group represented by the formula [I] can be produced. The formula below is one which represents the conversion of the methyl ester group to the amidoamine group represented by the formula [I] in the synthesis method.

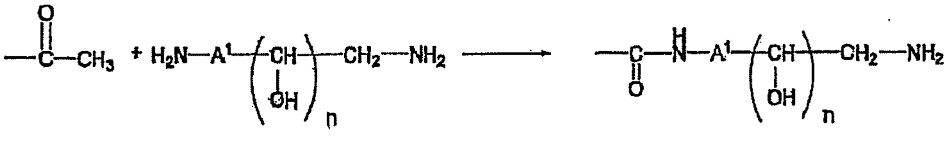

[Ia] [I]

[In the formula, $A^1$ and n represent the same as defined above.]

The reaction between the compound having the methyl ester group and the amine compound represented by

the formula [Ia] is performed in such a ratio that the amount of the amine compound represented by the formula [Ia] is generally about 3 to 20 mol and preferably about 5 to 10 mol with respect to 1 mol of the methyl ester group. The reaction between the compound having the methyl ester group and the amine compound represented by the formula [Ia] is generally performed in an appropriate solvent. Any of a wide variety of commonly-known solvents can be used as the solvent as long as it does not inhibit the reaction. Examples of the solvent include methanol, ethanol, 2-propanol, tetrahydrofuran, and 1,4-dioxane. Water may be contained in these solvents. The reaction is performed with continuous stirring generally at about 0 to 40°C, preferably at about 20 to 30°C, for about 90 to 180 hours, preferably for about 160 to 170 hours. The compound having the methyl ester group and the amine compound represented by the formula [Ia], which are used as raw materials, can be commonly-known compounds. For example, the reaction mixture obtained by the above reaction is cooled and then subjected to an isolation process such as filtration, concentration, or extraction to separate the crude reaction product; in addition, where necessary, a usual purification process such as column chromatography or recrystallization is performed. In this way, the amine compound having the amidoamine group represented by the formula [I] can be isolated and purified.

The amine compound having the amidoamine group represented by the formula [II] can be produced by allowing a core compound having an amino group to react with an amine compound having a methyl ester group at its terminal and represented by the formula [IIa] below in the same manner as described above.

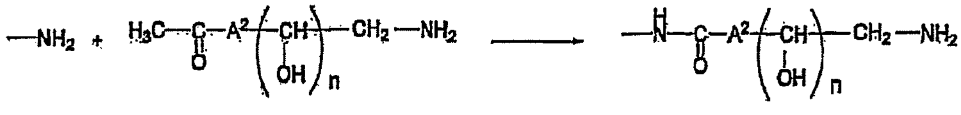

[IIa] [II]

[In the formula, $A^2$ and n represent the same as defined above.]

<High-molecular polymer of separation function layer>

Next, the high-molecular polymer which is the matrix of the separation function layer will be described. For example, a crosslinked polyvinyl alcohol (PVA) may be used as the high-molecular polymer which is the matrix of the separation function layer.

The crosslinking agent for crosslinking the polyvinyl alcohol is not particularly limited. It is preferable to use a crosslinking agent represented by the following formula (A).

$$M(OR^1)_n \qquad (A)$$

In the formula, M represents a metal atom having three or more valences, n represents an integer of 3 to 6, and $R^1$ represents: an alkyl group having 1 to 6 carbon atoms; an alkenyl group having 2 to 6 carbon atoms; a cycloalkyl group having 3 to 10 carbon atoms; a cycloalkenyl group having 3 to 10 carbon atoms; an aryl group having 6 to 10 carbon atoms; an aralkyl group having 7 to 12 carbon atoms; an acyl group having 2 to 7 carbon atoms; a group represented by the formula $-NHR^2$ (where $R^2$ represents an alkyl group having 1 to 6 carbon atoms); a group represented by the formula $-NR^3R^4$ (where $R^3$ and $R^4$ each independently represent an alkyl group having 1 to 6 carbon atoms); a group represented by the formula $-C(O)-NHR^5$ (where $R^5$ represents an alkyl group having 1 to 6 carbon atoms); a group represented by the formula $-C(O)-NR^6R^7$ (where $R^6$ and $R^7$ each independently represent an alkyl group having 1 to 6 carbon atoms); or a 5- to 10-membered heterocyclic group containing 1 to 3 oxygen atoms, nitrogen atoms, or sulfur atoms. These may be bonded together to form cyclic structures, and these groups or cyclic structures may have a substituent.

The crosslinking agent represented by the above formula (A) will be described in detail. M in the formula (A) represents a metal atom having three or more valences. Examples of the metal atom having three or more valences include titanium, zirconium, aluminum, and cobalt. Titanium is preferable. The alkyl group $R^1$ having 1 to 6 carbon atoms may be linear or branched, and specific examples thereof include methyl, ethyl, propyl, isopropyl, isobutyl, sec-butyl, tert-butyl, butyl, isopentyl, neopentyl, tert-pentyl, pentyl, isohexyl, and hexyl groups. The alkenyl group $R^1$ having 2 to 6 carbon atoms may be linear or branched, and specific examples thereof include allyl, 1-propenyl, 2-propenyl, isopropenyl, 3-butenyl, 2-butenyl, 1-butenyl, 1-methyl-2-propenyl, 1-methyl-1-propenyl, 1-ethyl-1-ethenyl, 2-methyl-2-propenyl, 2-methyl-1-propenyl, 3-methyl-2-butenyl, and 4-pentenyl groups. Specific examples of the cycloalkyl group $R^1$ having 3 to 10 carbon atoms include cyclopropyl, 2-methylcyclopropyl, cyclobutyl, cyclopentyl, cyclohexyl, cycloheptyl, cyclooctyl, cyclononyl, and cyclodecyl groups. Specific examples of the cycloalkenyl group $R^1$ having 3 to 10 carbon atoms include 1-cyclopropenyl, 2-cyclopropenyl, 1-cyclobutenyl, 2-cyclobutenyl, 1-cyclopentenyl, 2-cyclopentenyl, 3-cyclopentenyl, 1-cyclohexenyl, 2-cyclohexenyl, 3-cyclohexenyl, 1-cycloheptenyl, 2-cycloheptenyl, 3-cycloheptenyl, 4-cycloheptenyl, 1-cyclooctenyl, 2-cyclooctenyl, 3-cyclooctenyl, 4-cyclooctenyl, 1-cyclononenyl, 2-cyclononenyl, 3-cyclononenyl, 4-cyclononenyl, 1-cyclodecenyl, 2-cyclodecenyl, 3-cyclodecenyl, 4-cyclodecenyl, 2,4-cyclopentadienyl, 2,5-cyclohexadienyl, 2,4-cycloheptadienyl, and 2,6-cycloheptadienyl groups. Specific examples of the aryl group $R^1$ having 6 to 10 carbon atoms include phenyl and naphthyl groups. Specific examples of the aralkyl group $R^1$ having 7 to 12 carbon atoms include benzyl, phenethyl, phenylpropyl, phenylbutyl, phenylpentyl, phenylhexyl, naphthylmethyl, naphtylethyl, and diphenylmethyl groups. Specific examples of the acyl group $R^1$ having 2 to 7 carbon atoms include acetyl, propionyl, butyryl, isobutyryl, valeryl, isovaleryl, pivaloyl, and benzoyl groups. For the group $R^1$ represented by the formula $-NHR^2$ (where $R^2$ represents an alkyl group having 1 to 6 carbon atoms), the group $R^1$ represented by the formula $-NR^3R^4$ (where $R^3$ and $R^4$ each independently represent an alkyl group having 1 to 6 carbon atoms), the group $R^1$ represented by the formula $-C(O)-NHR^5$ (where $R^5$ represents an alkyl group having 1 to 6 carbon atoms), and the group $R^1$ represented by the formula $-C(O)-NR^6R^7$ (where $R^6$ and $R^7$ each independently represent an alkyl group having 1 to 6 carbon atoms), the alkyl groups $R^2$, $R^3$, $R^4$, $R^5$, $R^6$, and $R^7$ each having 1 to 6 carbon atoms are the same as described for the alkyl group $R^1$ having 1 to 6 carbon atoms. The 5- to 10-membered heterocyclic group $R^1$ containing 1 to 3 oxygen atoms, nitrogen atoms, or sulfur atoms may be a 5- to 10-membered heteroalicyclic group or a 5- to10-membered heteroaromatic group. Examples of the 5- to 10-membered heterocyclic group containing 1 to 3 oxygen atoms, nitrogen atoms, or sulfur atoms include furan, thiophene, pyrrole, 2H-pyrrole, pyran, thiopyran, pyridine, oxazole, isoxazole, thiazole, isothiazole, furazan, imidazole, pyrazole, pyrrolidine, imidazolidine, pyrazolidine, piperidine, piperazine, pyrroline, imidazoline, pyrazoline, morpholine, azepine, and azocine. The "5- to 10-membered heterocyclic group containing 1 to 3 oxygen atoms, nitrogen atoms, or sulfur atoms" may be a saturated cyclic group or an unsaturated cyclic group. The "5- to 10-membered heterocycle containing 1 to 3 oxygen atoms, nitrogen atoms, or sulfur atoms" is preferably a "5- to 8-membered heterocycle containing 1 to 3 oxygen atoms, nitrogen atoms, or sulfur atoms", and is more preferably a "5- to 7-membered heterocycle containing 1 to 3 oxygen atoms, nitrogen atoms, or sulfur atoms". In addition, the "5- to 10-membered heterocycle containing 1 to 3 oxygen atoms, nitrogen atoms, or sulfur atoms" is preferably a "5- to 10-membered heterocycle containing 1 to 2 oxygen atoms, nitrogen atoms, or sulfur atoms", more preferably a "5- to 8-membered heterocycle containing 1 to 2 oxygen atoms, nitrogen atoms, or sulfur atoms", and even more preferably a "5- to 7-membered heterocycle containing 1 to 2 oxygen atoms, nitrogen atoms, or sulfur atoms".

The above-described M and group $R^1$ may be bonded together to form a cyclic structure. The above-described groups $R^1$ or cyclic structures may have a substituent. Preferred examples of the substituent that the groups or cyclic structures may have include: halogen atoms such as fluorine, chlorine, bromine, and iodine atoms; halogenated alkyl groups having 1 to 6 carbon atoms, such as chloromethyl, 2-chloroethyl, 3-chloroethyl, and trifluoromethyl groups; alkyl groups having 1 to 6 carbon atoms, such as methyl, ethyl, propyl, isopropyl, isobutyl, sec-butyl, tert-butyl, butyl, isopentyl, neopentyl, tert-pentyl, pentyl, isohexyl, and hexyl groups; alkoxy groups having 1 to 6 carbon atoms, such as methoxy, ethoxy, n-propyloxy, n-butoxy, and n-hexyloxy groups; a cyano group; a phenoxy group; an amino group; and a hydroxyl group.

Among the above-mentioned crosslinking agents, a crosslinking agent represented by the following formula is preferably used.

$$Ti(OR^1)_4$$

(In the formula, $R^1$ is the same as described above.)

Particularly, it is preferable to use a crosslinking agent represented by the formulae below.

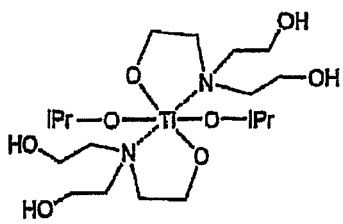

(In the formula, iPr denotes an isopropyl group.)

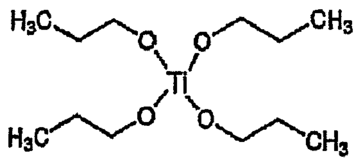

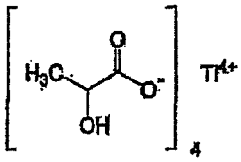

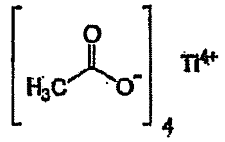

$Ti(OCH_3)_4$

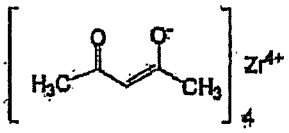

$Zr(OCH_2CH_2CH_2CH_3)_4$

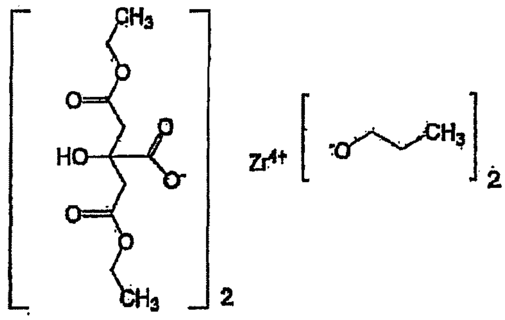

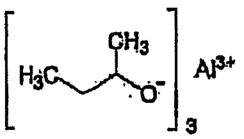

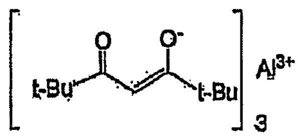

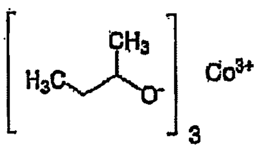

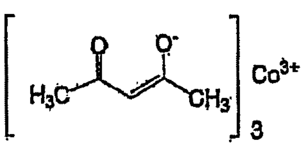

(In the formula, t-Bu represents a tert-butyl group.)

The titanium-based crosslinking agents are particularly preferable as the crosslinking agent because they can undergo a crosslinking reaction with hydroxyl groups of PVA while having low reactivity with amino groups of polyamidoamine dendrimers and being poorly reactive with polyamidoamine dendrimers.

It is preferable to use polyvinyl alcohol in the form of an aqueous solution. In this case, the concentration of the aqueous solution is 0.5 to 30 weight%, and preferably 1 to 10 weight%. The weight-average molecular weight of the polyvinyl alcohol is generally about 5,000 to 1,000,000, and preferably about 40,000 to 400,000. The degree of polymerization is generally about 110 to 23,000, and preferably about 1,000 to 10,000. PVA is a hydrophilic polymer having hydroxyl groups and is therefore excellent in compatibility with dendrimers. In addition, PVA has low gas permeability, and the amount of gases passing through a portion formed of PVA is therefore small. For these reasons, PVA is better as a material of the gas separation membrane than other polymers.

The amount of the amine compound immobilized in the polyvinyl alcohol is generally about 1 to 50 parts by weight, and preferably about 3 to 20 parts by weight per 100 parts by weight of an aqueous solution of the polyvinyl alcohol.

A separation function layer in which a polyamidoamine dendrimer is immobilized in a PVA having a crystal site

and a crosslinked site resulting from crosslinking with a titanium-based crosslinking agent, is particularly preferable as the separation function layer of the present invention. The titanium-based crosslinking agent is preferably used because it is a crosslinking agent that does not react with the polyamidoamine dendrimer but reacts only with the PVA.

The high-molecular polymer which is the matrix of the separation function layer may be prepared by polymerizing a polyfunctional polymerizable monomer or a monofunctional polymerizable monomer. The polyfunctional polymerizable monomer is not particularly limited as long as it is a polymerizable compound having two or more carbon-carbon unsaturated bonds. Examples thereof include polyfunctional acrylic monomers such as polyfunctional (meth)acrylamides and polyfunctional (meth)acrylates, and polyfunctional vinyl monomers such as polyfunctional vinyl ethers and divinylbenzene. These polyfunctional polymerizable monomers may be used alone, or two or more thereof may be used in combination.

Examples of the polyfunctional (meth)acrylamides include N,N'-(1,2-dihydroxyethylene) bisacrylamide, Ethidium bromide-N,$N^1$-bisacrylamide, N,N'-ethylenebisacrylamide, and N,N'-methylenebisacrylamide.

Examples of the polyfunctional (meth)acrylates include di(meth)acrylates, tri(meth)acrylates, and tetra(meth)acrylates.

Examples of the di(meth)acrylates include alkylene glycol di(meth)acrylates such as (poly)ethylene glycol di(meth)acrylate, (poly)propylene glycol di(meth)acrylate, 1,6-hexanediol di(meth)acrylate, trimethylolpropane di(meth)acrylate, and pentaerythritol di(meth)acrylate.

Examples of the tri(meth)acrylates include trimethylolpropane tri(meth)acrylate, pentaerythritol tri(meth)acrylate, ethylene oxide-modified trimethylolpropane tri(meth)acrylate, and glycerin tri(meth)acrylate.

Examples of the tetra(meth)acrylates include ditrimethylolpropane tetra(meth)acrylate and pentaerythritol tetra(meth)acrylate.

Examples of the polyfunctional vinyl ethers include trimethylolpropane trivinyl ether, ditrimethylolpropane tetravinyl ether, and glycerin trivinyl ether.

Examples of the monofunctional polymerizable monomer include: monofunctional acrylic monomers such as monofunctional (meth)acrylamides and monofunctional (meth)acrylates; monofunctional vinyl monomers such as monofunctional vinyl ethers, monofunctional N-vinyl compounds, and monofunctional vinyl compounds; and monofunctional α,ß-unsaturated compounds.

Examples of the monofunctional (meth)acrylamides include 2-acetamidoacrylic acid, (meth)acrylamide, 2-acrylamido-2-methylpropanesulfonic acid, N-(butoxymethyl)acrylamide, N-tert-butylacrylamide, diacetone acrylamide, N,N-dimethylacrylamide, and N-[3-(dimethylamino)propyl]methacrylamide.

Examples of the monofunctional (meth)acrylates include methyl (meth)acrylate, ethyl (meth)acrylate, butyl (meth)acrylate, 2-ethylhexyl (meth)acrylate, cyclohexyl (meth)acrylate, methoxyethyl (meth)acrylate, methoxypolyethylene glycol (meth)acrylate, (meth)acrylic acid, N,N-dimethylaminoethyl (meth)acrylate, (poly)ethylene glycol methacrylate, and polypropylene glycol (meth)acrylate.

Examples of the monofunctional vinyl ethers include methyl vinyl ether, ethyl vinyl ether, butyl vinyl ether, 2-ethylhexyl vinyl ether, cyclohexyl vinyl ether, methoxyethyl vinyl ether, and methoxypolyethylene glycol vinyl ether.

Examples of the monofunctional N-vinyl compounds include N-vinylpyrrolidone, N-vinylcaprolactam, N-vinylformamide, and N-vinylacetamide. Examples of the monofunctional vinyl compounds include styrene, α-methylstyrene, and vinyl acetate.

Examples of the monofunctional α,ß-unsaturated compounds include maleic anhydride, maleic acid, dimethyl maleate, diethyl maleate, fumaric acid, dimethyl fumarate, diethyl fumarate, monomethyl fumarate, monoethyl fumarate, itaconic anhydride, itaconic acid, dimethyl itaconate, methylenemalonate, dimethyl methylenemalonate, cinnamic acid, methyl cinnamate, crotonic acid, and methyl crotonate.

Where necessary, the polymerization reaction for forming the high-molecular polymer may be performed by combined use of the polyfunctional polymerizable monomer and the monofunctional polymerizable monomer. By the combined use, the size of the network of the crosslinked polymer can be regulated. The high-molecular polymer formed by this polymerization reaction may have a crosslinked structure where necessary. In this case, a crosslinkable amine compound having acryl groups and/or methacryl groups at three or more branch terminals of its molecule may be used as a crosslinking agent.

The high-molecular polymer which is the matrix of the separation function layer is not particularly limited, and examples thereof include (poly)ethylene glycol di(meth)acrylate and polyvinyl alcohol.

<Hydrophobic layer>

The hydrophobic layers arranged on both faces of the separation function layer may be formed of a hydrophobic polymer poorly permeable to water; in particular, the hydrophobic layer is preferably formed of a hydrophobic polymer that ensures that the contact angle of the hydrophobic layer with water is 10° or more. If the contact angle is less than 10°, dew condensation water is more likely to penetrate the hydrophobic layer, which makes the amine compound of

the separation function layer more likely to dissolve.

In addition, the hydrophobic layer preferably has a $CO_2$ permeation rate of $10^{-11}$ to $10^{-7}$ ($m^3/m^2 \cdot Pa \cdot s$). If the $CO_2$ permeation rate is too low, the hydrophobic layer causes resistance to gas permeation, and the gas permeation performance of the separation membrane is reduced. On the other hand, if the $CO_2$ permeation rate is too high, this means that the hydrophobic layer is porous, and therefore dew condensation water is more likely to penetrate the hydrophobic layer.

Examples of the hydrophobic polymer which is a material forming the hydrophobic layer include: elastomers such as a silicone elastomer; fluorine resins such as polytetrafluoroethylene; poly-1-trimethylsilyl propyne; and polydiphenylacetylene. Among these, a silicone elastomer is particularly preferably used.

The thickness of the hydrophobic layer is not particularly limited. From the viewpoint of increasing gas permeability and reducing water permeability, the thickness is preferably 0.1 to 10 μm, and more preferably 1 to 5 μm.

<Crack inhibitor>

When a solution of the material for forming the hydrophobic layer is applied and dried on the separation function layer, cracks may occur in the separation function layer. This is thought to be because the degree of contraction during heat drying is different between the high-molecular polymer which is the matrix of the separation function layer and the hydrophobic layer. In the present invention, the separation function layer includes a crack inhibitor in order to prevent such occurrence of cracks. The crack inhibitor has the property of reducing the stiffness of the separation function layer. This property is thought to make it possible to reduce the difference in the degree of contraction during heat drying between the separation function layer and the hydrophobic layer and to prevent the occurrence of cracks in the separation function layer.

It is recommended that the crack inhibitor be a high-molecular compound that does not participate in the polymerization reaction of the polymerizable monomer for forming the high-molecular polymer or be a high-molecular compound that does not participate in the crosslinking reaction of the high-molecular polymer. The presence of the crack inhibitor which is such a high-molecular compound is thought to make flexible the structure of the high-molecular polymer of the separation function layer. This is thought to make it possible to reduce the difference in the degree of contraction during heat drying between the separation function layer and the hydrophobic layer and to prevent the occurrence of cracks in the separation function layer. In addition, it is recommended that the crack inhibitor be a high-molecular compound soluble in a solution of the polymerizable monomer. Furthermore, it is recommended that the crack inhibitor be a high-molecular compound that exhibits compatibility with the polymerizable monomer for forming the high-molecular polymer or with the high-molecular polymer.

For example, it is recommended that at least one selected from polyvinylpyrrolidone, polyethylene glycol, polydiallyldimethylammonium chloride, chitosan, and a cellulose derivative be contained as the crack inhibitor.

It is recommended that the crack inhibitor be polyvinylpyrrolidone that is a linear polymer of N-vinyl-2-pyrrolidone. If the content of the polyvinylpyrrolidone in the separation function layer is too low, it is difficult to fully prevent the occurrence of cracks. On the other hand, if the content of the polyvinylpyrrolidone in the separation function layer is too high, the polymerization reaction or crosslinking reaction for forming the high-molecular polymer may be hindered. In view of these, the content of the polyvinylpyrrolidone as the crack inhibitor is preferably 2 to 20 weight% with respect to the high-molecular polymer of the separation function layer.

Examples of the cellulose derivative include carboxymethyl cellulose and hydroxypropion cellulose. The cellulose derivative has a tendency to cause gelation of the solution for forming the separation function layer. Therefore, in view of the efficiency of the formation of the separation function layer, the content of the cellulose derivative as the crack inhibitor is preferably 1 mass% or less of the separation function layer.

<Porous support membrane>

The separation membrane may be supported by a porous support membrane. A membrane composed of the porous support membrane and the separation membrane will be referred to as a composite separation membrane. The porous support membrane can be produced, for example, using polymers mentioned later etc. A film of a ceramic or polyethylene terephthalate (PET) can also be used as the porous support membrane. Specifically, in the case where the porous support membrane is produced using a polymer, the porous support membrane can be produced by a method including dissolving the polymer in a solvent to obtain a raw material solution, and then bringing the raw material solution into contact with a congealing liquid (a mixed solution of a solvent and a non-solvent) to induce phase separation by an increase in non-solvent concentration (non-solvent-induced phase separation process (NIPS process); see JP 1(1989)-22003 B2). Examples of the ceramic include alumina, zirconia, titania, and silica.

Examples of the polymer used for producing the porous support membrane include polysulfone (PSF), polyethersulfone, polyarylethersulfone, polyphenylene sulfone, triacetyl cellulose, cellulose acetate, polyacrylonitrile, polyvinylidene fluoride, aromatic nylon, polyethylene terephthalate (PET), polyethylene naphthalate, polyarylate, polyimide, epoxy resin, polyether, cellophane, aromatic polyamide, polyethylene, and polypropylene. Among these, polysulfone, polyarylethersulfone, and epoxy resin are preferably used in view of the fact that they are stable chemically and mechanically.

Examples of the solvent include N-methylpyrrolidone (NMP), acetone, and dimethylformamide. The solvent is not particularly limited as long as it can dissolve in the congealing liquid at the time of congelation. Examples of the non-solvent include water, monohydric alcohol, polyhydric alcohol, ethylene glycol, and tetraethylene glycol.

In preparation of the raw material solution, it is preferable to add a swelling agent so as to increase the number of through holes in the support membrane obtained after congelation and improve the gas permeability. For example, one material selected from polyethylene glycol, polyvinylpyrrolidone, hydroxypropyl cellulose, common salt, lithium chloride, and magnesium bromide, or a mixture of two or more thereof, can be used as the swelling agent. Among these swelling agents, polyethylene glycol is preferable, and polyethylene glycol having a weight-average molecular weight of 400 to 800 is particularly preferable. The concentrations of the raw material solution and the congealing liquid are not particularly limited as long as the porous support membrane can be obtained by a non-solvent-induced phase separation process in which the raw material liquid and the congealing liquid are brought into contact to induce phase separation. For example, in the case where polyarylethersulfone is used as the polymer which is a raw material, it is preferable that the raw material solution be a 20 to 35 wt.% solution in terms of the efficiency of membrane production.

The method for bringing the raw material solution and the congealing liquid into contact is not particularly limited, and examples thereof include a method consisting of introducing the raw material solution into the congealing liquid. The solvent concentration in the congealing liquid is not particularly limited. If the solvent concentration in the congealing liquid is varied for congelation of the raw material solution, the structure of the support membrane changes, with the result that the pressure resistance can be increased.

The diameter of the pores of the porous support membrane is preferably 100 nm or less, and more preferably 10 nm or less. The thickness of the porous support membrane is not particularly limited as long as the gas permeability of the separation function layer does not exceed the gas permeability of the porous support membrane. The thickness of the porous support membrane is generally 25 to 125 $\mu$m, and preferably 40 to 75 $\mu$m.

In order to impart mechanical strength, a woven fabric or a non-woven fabric may be stacked on the porous support membrane.

Next, the method for producing the composite separation membrane will be described. The method of the present invention for producing a composite separation membrane includes the steps of: forming a high-molecular polymer by a polymerization reaction or a crosslinking reaction in the presence of an amine compound represented by the above formula [I] and/or [II] and of a crack inhibitor so as to obtain a separation function layer; and applying and drying a solution of a hydrophobic polymer on both faces of the separation function layer so as to obtain hydrophobic layers.

A first embodiment of the method for producing the composite separation membrane is a method including the steps of: (1) applying, onto a substrate, a mixed solution containing an amine compound represented by the formula [I] and/or [II], a crack inhibitor, a polyfunctional polymerizable monomer, a polymerization initiator, and, where necessary, a crosslinking agent or a mixed solution containing an amine compound represented by the formula [I] and/or [II], a crack inhibitor, polyvinyl alcohol, and a crosslinking agent, and immobilizing the amine compound in the high-molecular polymer formed by a polymerization reaction or a crosslinking reaction so as to form a separation function layer; (2) applying a solution containing a hydrophobic polymer to the separation function layer, and curing the hydrophobic polymer by heat drying so as to form a hydrophobic layer; (3) transferring the resulting stack of the separation function layer and the hydrophobic layer onto a porous support membrane; and (4) applying a solution containing a hydrophobic polymer to the separation function layer, and curing the hydrophobic polymer by heat drying so as to form a hydrophobic layer.

For the production step (1), the solvent for obtaining the mixed solution is not particularly limited, and any of a wide variety of commonly-known solvents can be used as long as it does not inhibit the polymerization reaction or the crosslinking reaction. Examples of such solvents include methanol, ethanol, 2-propanol, tetrahydrofuran, and 1,4-dioxane. Water may be contained in these solvents.

For the production step (1), the mixed solution may be obtained by directly adding the crack inhibitor in the form of a solid or by adding a solution of the crack inhibitor.

For the production step (1), the technique for allowing the polyfunctional polymer to undergo the polymerization reaction may be thermal polymerization or photopolymerization. In this case, generally, a thermal polymerization initiator or a photopolymerization initiator is used.

A commonly-known material can be used as the thermal polymerization initiator, and examples thereof include: organic peroxides such as methyl ethyl ketone peroxide, benzoyl peroxide, dicumyl peroxide, t-butyl hydroperoxide, cumene hydroperoxide, t-butyl peroxyoctoate, t-butyl peroxybenzoate, and lauroyl peroxide; and azo compounds such as azobisisobutyronitrile. In thermal polymerization, a curing accelerator may be used as an admixture. Examples of the curing accelerator include cobalt naphthenate, cobalt octylate, and tertiary amines.

The amount of the thermal polymerization initiator to be added is preferably 0.01 to 10 parts by weight, and

more preferably 0.1 to 1 parts by weight per 100 parts by weight of the polyfunctional polymerizable monomer.

A commonly-known material can be used as the photopolymerization initiator, and examples thereof include the compounds listed below. These compounds may be used alone or as a mixture of two or more thereof.

Benzoin and alkyl ethers thereof such as benzoin methyl ether, benzoin ethyl ether, benzoin isopropyl ether, and benzoin isobutyl ether; and acetophenones such as acetophenone, 2,2-dimethoxy-2-phenylacetophenone, 1,1-dichloroacetophenone, 4-(1-t-butyldioxy-1-methylethyl)acetophenone, 2-methyl-1- [4-(methylthio)phenyl]-2-morpholino-propan-1-one, 2-benzyl-2-dimethylamino-1-(4-morpholinophenyl)-butanone-1, diethoxyacetophenone, 2-hydroxy-2-methyl-1-phenylpropan-1-one, benzyl dimethyl ketal, 4-(2-hydroxyethoxy)phenyl-(2-hydroxy-2-propyl) ketone, 1-hydroxycyclohexyl phenyl ketone, and 2-hydroxy-2-methyl-1-[4-(1-methylvinyl)phenyl]propanone oligomer.

Anthraquinones such as 2-methylanthraquinone, 2-amylanthraquinone, 2-t-butylanthraquinone, and 1-chloroanthraquinone; thioxanthones such as 2,4-dimethylthioxanthone, 2,4-diisopropylthioxanthone, 2-chlorothioxanthone, 2-isopropylthioxanthone, 4-isopropylthioxanthone, 2,4-diethylthioxantone, 2,4-dichlorothioxanthone, 1-chloro-4-propoxythioxanthone, and 2-(3-dimethylamino-2-hydroxy)-3,4-dimethyl-9H-thioxanthone-9-one methochloride; ketals such as acetophenone dimethyl ketal and benzyl dimethyl ketal; benzophenones such as benzophenone, 4-(1-t-butyldioxy-1-methylethyl)benzophenone, 3,3',4,4'-tetarakis(t-butyldioxycarbonyl)benzophenone, methyl o-benzoylbenzoate, 4-phenylbenzophenone, 4-benzoyl-4'-methyl-diphenyl sulfide, 3,3',4,4'-tetra(t-butylperoxylcarbonyl)benzophenone, 2,4,6-trimethylbenzophenone, 4-benzoyl-N,N-dimethyl-N-[2-(1-oxo-2-propenyloxy)ethyl]benzenemethanaminium bromide, and (4-benzoylbenzyl)trimethylammonium chloride; acylphosphine oxides; and xanthones.

The amount of the photopolymerization initiator to be added is preferably 0.5 to 10 parts by weight, and more preferably 2 to 3 parts by weight per 100 parts by weight of the polyfunctional polymerizable monomer.

In the case of photopolymerizing the polyfunctional polymerizable monomer, a basic compound can be used as a sensitizer together with the photopolymerization initiator. It is preferable to use an amine as the basic compound, and examples of the amine include monomethylamine, dimethylamine, trimethylamine, monoethylamine, diethylamine, triethylamine, monopropylamine, dimethylpropylamine, monoethanolamine, diethanolamine, ethylenediamine, diethylenetriamine, dimethylaminoethyl methacrylate, and polyethyleneimine. Among these, the tertiary amines are particularly suitable.

The amount of the sensitizer to be added is preferably 1 to 10 parts by weight, and more preferably 5 to 8 parts by weight per 100 parts by weight of the photopolymerization initiator.

For the polymerization reaction, thermal polymerization is preferably performed by heating, and photopolymerization is preferably performed by irradiation with ultraviolet light or the like. The solvent is not particularly limited as long as it can dissolve the amine compound and the polyfunctional polymerizable monomer. Generally, an alcohol (e.g., methanol, ethanol, etc.) can be suitably used. The thermal polymerization is performed generally at about 40 to 90°C, preferably at about 60 to 70°C, generally for about 2 to 24 hours, preferably for about 5 to 10 hours. The photopolymerization is performed generally by irradiation using ultraviolet light with a wavelength of 320 to 390 nm at an intensity of about 5000 to 5700 [mJ/$cm^2$]. The thermal polymerization and the photopolymerization may be performed in combination. For example, the photopolymerization may be performed after the thermal polymerization, the thermal polymerization may be performed after the photopolymerization, or the photopolymerization and the thermal polymerization may be simultaneously performed. The crack inhibitor does not participate in the polymerization reaction.

A crosslinking agent may be used so that the high-molecular polymer formed by the polymerization reaction of the polyfunctional polymerizable monomer has a crosslinked structure. As such a crosslinking agent, for example, a crosslinkable amine compound having acryl groups and/or methacryl groups at three or more branch terminals of its molecule can be used. The crack inhibitor does not participate in the crosslinking reaction.

With the above-described production method, the high-molecular polymer is formed, and, at the same time, the above-described amine compound is immobilized in the high-molecular polymer, so that a separation function layer is obtained. A suitable separation function layer is one in which the high-molecular polymer has a three-dimensional network structure and in which the amine compound is enclosed and immobilized in the network structure.

In the case of using a mixed solution of an amine compound, a crack inhibitor, polyvinyl alcohol, and a crosslinking agent in the production step (1), the polyvinyl alcohol is crosslinked by the crosslinking agent, and the amine compound is immobilized in the high-molecular polymer (the polyvinyl alcohol having crosslinked sites). The crack inhibitor does not participate in the crosslinking reaction of the polyvinyl alcohol.

The method for applying a mixed solution onto a substrate in the production step (1), and the method for applying a hydrophobic polymer solution in the production steps (2) and (4) are not particularly limited. The mixed solution or the hydrophobic polymer solution may be cast to the object to be coated. Alternatively, the mixed solution or the hydrophobic polymer may be applied by a commonly-known spin coating method, dip coating method, spray coating method, or the like.

A second embodiment of the method of the present invention for producing the composite separation membrane is a method including the steps of: (1) applying a solution containing a hydrophobic polymer onto a porous support membrane, and curing the hydrophobic polymer by heat drying so as to form a hydrophobic layer; (2) applying, onto the formed hydrophobic layer, a mixed solution containing an amine compound represented by the above formula [I] and/or

[II], a crack inhibitor, a polyfunctional polymerizable monomer, a polymerization initiator, and, where necessary, a crosslinking agent, or a mixed solution containing an amine compound represented by the above formula [I] and/or [II], a crack inhibitor, polyvinyl alcohol, and a crosslinking agent, and immobilizing the amine compound in a high-molecular polymer formed by a polymerization reaction or a crosslinking reaction so as to form a separation function layer; and (3) applying an organic solution containing a hydrophobic polymer to the separation function layer, and curing the hydrophobic polymer by heat drying so as to form a hydrophobic layer.

According to the second embodiment, the step of transferring the stack of the separation function layer and the hydrophobic layer onto the porous support membrane can be omitted; therefore, the production steps can be simplified.

Alternatively, the composite separation membrane may be obtained by fabricating the separation function layer, the hydrophobic layers, and the porous support membrane individually, and then arranging the hydrophobic layer, the separation function layer, the hydrophobic layer, and the porous support membrane in this order. A commonly-known method can be employed as the method for arranging the hydrophobic layer, the separation function layer, the hydrophobic layer, and the porous support membrane in this order, and examples of the method include lamination methods. Examples of the lamination methods include dry lamination and hot-melt lamination. Specifically, these components are attached together using an adhesive or an adhesive film.

The adhesive is not particularly limited, and examples thereof include water-based adhesives (e.g., $\alpha$-olefin-based adhesives, aqueous polymer-isocyanate-based adhesives, etc.), aqueous dispersion-based adhesives (e.g., acrylic resin emulsion adhesives, epoxy resin emulsion adhesives, vinyl acetate resin emulsion adhesives, etc.), solvent-based adhesives (e.g., nitrocellulose adhesives, vinyl chloride resin solvent-based adhesives, chloroprene rubber-based adhesives, etc.), reactive adhesives (e.g., cyanoacrylate-based adhesives, acrylic resin-based adhesives, silicone-based adhesives, etc.), hot-melt adhesives (e.g., ethylene-vinyl acetate resin hot-melt adhesives, polyamide resin hot-melt adhesives, polyamide resin hot-melt adhesives, polyolefin resin hot-melt adhesives, etc.). Examples of the adhesive film include films made of transparent thermoplastic resins such as polyvinyl butyral, polyurethane, and ethylene-vinyl acetate copolymer resin. The thickness of a layer of the adhesive or the adhesive film is not particularly limited as long as the gas permeabilities of the separation function layer and the porous support membrane are not deteriorated.

## EXAMPLES

Hereinafter, the embodiments of the present invention will be described in detail using examples. The present invention is not limited to the examples given below. First, the method for evaluating the examples and comparative examples will be described.

<Occurrence or non-occurrence of cracks>

Each of the fabricated composite separation membranes was visually observed to conform whether cracks occurred in the separation function layer.

<Measurement of separation coefficient $\alpha$ and permeances (permeation rates) $Q_{CO2}$ and $Q_{He}$>

A gas permeation measuring instrument (manufactured by GL Sciences Inc.) was used. A mixed gas containing $CO_2$ gas (80 volume%) and He gas (20 volume%) was fed to the feed side of the composite separation membrane at atmospheric pressure or at a total pressure of 0.7 MPa, while humidified Ar gas having atmospheric pressure and a humidity of 90% was caused to flow on the permeate side of the membrane. A portion of the Ar gas flowing on the permeate side was introduced into a gas chromatograph at regular time intervals, and the permeances of $CO_2$ and He were determined from increases in the concentrations of the $CO_2$ gas and He gas over time. The mixed gas was humidified to a humidity of 90% using a bubbler. The measurement was performed 15 hours after the start of feed of the mixed gas. The conditions set in the gas permeation measuring instrument, the analysis conditions for gas chromatography, and the method for calculating the gas permeances are as presented below.

(Conditions set in gas permeation measuring instrument)

Amount of feed gas: 250 cc/min
Composition of feed gas: $CO_2$ gas (80 volume%), He gas (20 volume%)
Gas circulating on the permeate side: Ar gas
Amount of gas circulating on the permeate side: 10 cc/min
Area for permeation: 8.04 $cm^2$
Measurement temperature: 40°C
Bubbler temperature: 38.0°C

Humidity: 90%

(Analysis conditions for gas chromatography)

Amount of Ar carrier gas: About 20 cc/min
TCD temperature: 150°C
Oven temperature: 80°C
TCD current: 70 mA
TCD polarity: [-] LOW
TCD LOOP: 1 ml Silcosteel tube 1/16" × 1.0 × 650 mm

(Method for calculating separation coefficient $\alpha$ and permeances $Q_{CO2}$ and $Q_{He}$)

The amounts N of the gases having permeated were calculated from the gas concentrations in the permeate-side flowing gas which were determined by the gas chromatography, and the permeances $Q_{CO2}$ [$m^3/(m^2 \cdot Pa \cdot s)$] and $Q_{He}$ [$m^3/(m^2 \cdot Pa \cdot s)$] were calculated from the formulae 1 and 2 below. In addition, the separation coefficient $\alpha$ [-] was calculated by the formula 3 below.

$$Q_{CO2} = \frac{N_{CO2}}{A \times (P_f \times X_{CO2} - P_p \times Y_{CO2})} \cdots 1$$

$$Q_{He} = \frac{N_{He}}{A \times (P_f \times X_{He} - P_p \times Y_{He})} \cdots 2$$

$$\alpha = \frac{(Y_{CO2}/Y_{He})}{(X_{CO2}/X_{He})} \cdots 3$$

(In the formulae, $N_{CO2}$ and $N_{He}$ respectively represent the amounts of $CO_2$ gas and He gas having permeated, $P_f$ and Pp respectively represent the total pressures of the feed gas and the permeate gas, A represents the area of the membrane, $X_{CO2}$ and $X_{He}$ respectively represent the molar fractions of $CO_2$ gas and He gas in the feed gas, and $Y_{CO2}$ and $Y_{He}$ respectively represent the molar fractions of $CO_2$ gas and He gas in the permeate gas.)

<Example 1>

(Fabrication of composite separation membrane)

A 50 mass% methanol solution of a generation 0 polyamidoamine dendrimer (manufactured by Sigma-Aldrich Co., LLC.) was distilled under reduced pressure by a rotary evaporator in a water bath at 40°C for 5 hours, followed by vacuum drying for 12 hours to isolate the generation 0 polyamidoamine dendrimer. RO water was added to the isolated generation 0 polyamidoamine dendrimer to obtain a 50 mass% aqueous solution of the generation 0 polyamidoamine dendrimer. An amount of 4.9 g of this 50 mass% aqueous solution of the generation 0 polyamidoamine dendrimer, 2.406 g of RO water, and 0.2 g of polyvinylpyrrolidone PVP K90 (manufactured by Wako Pure Chemical Industries, Ltd., Number-average molecular weight: 300,000) were sequentially added in this order, and the mixture was stirred for 5 minutes, followed by mixing with 1.96 g of a solution of polyethylene glycol dimethacrylate (PEGDMA) (manufactured by Sigma-Aldrich Co., LLC., Molecular weight: 750) and 0.023 g of a photopolymerization initiator, Irgacure 2959 (manufactured by BASF, Component: 1-[4-(2-hydroxyethoxy)-phenyl]-2-hydroxy-2-methyl-1-propan-1-one). Thus, a mixed solution was obtained. This solution was cast onto a PET film to a thickness of 100 μm, and ultraviolet light with a wavelength of 320 to 390 nm was applied at an irradiation intensity of 5000 to 5700 mJ/cm$^2$ to induce a polymerization reaction of the PEGDMA, so that a separation function layer was obtained. Thereafter, a solution of silicone, YSR 3340 (manufactured by Momentive Performance Materials Japan LLC.), was cast onto the separation function layer to a thickness of 200 μm, and thus a silicone coating layer was obtained. The obtained silicone coating layer was dried at 90°C for 20 minutes to form a hydrophobic layer. The resulting stack of the separation function layer and the hydrophobic layer was transferred onto a polyethersulfone ultrafiltration membrane (manufactured by Merck Millipore Corporation, Product name: Biomax ultrafiltration disc, NMWL (Nominal Molecular Weight Limit): 300 kDa, Filter diameter: 47 mm)

serving as a porous support membrane. A solution of silicone was prepared so as to contain 100 parts by weight of YSR 3022 (manufactured by Momentive Performance Materials Japan LLC.), 450 parts by weight of IP solvent (manufactured by Idemitsu Kosan Co., Ltd.), and 4 parts by weight of YC 6843 (manufactured by Momentive Performance Materials Japan LLC.), and was cast onto the separation function layer to a thickness of 130 μm, followed by drying with an oven at 130°C for 1 minute to obtain a composite separation membrane according to Example 1. The content of the PVP relative to the high-molecular polymer (PEGDMA) in the separation function layer was 8 mass%.

<Example 2>

A composite separation membrane according to Example 2 was obtained in the same manner as in Example 1, except that the added amount of the PVP was 0.05 g, the added amount of the solution of PEGDMA was 2.083 g, and the added amount of Irgacure 2959 was 0.0245 g. The content of the PVP relative to the high-molecular polymer in the separation function layer was 2 mass%.

<Example 3>

A composite separation membrane according to Example 3 was obtained in the same manner as in Example 2, except that the added amount of the PVP was 0.125 g, the added amount of the solution of PEGDMA was 2.020 g, and the added amount of Irgacure 2959 was 0.0238 g. The content of the PVP relative to the high-molecular polymer in the separation function layer was 5 mass%.

<Example 4>

A composite separation membrane according to Example 4 was obtained in the same manner as in Example 2, except that the added amount of the PVP was 0.25 g, the added amount of the solution of PEGDMA was 1.913 g, and the added amount of Irgacure 2959 was 0.0225 g. The content of the PVP relative to the high-molecular polymer in the separation function layer was 10 mass%.

<Example 5>

A composite separation membrane according to Example 5 was obtained in the same manner as in Example 1, except that 0.2 g of polyethylene glycol (PEG) (manufactured by Sigma-Aldrich Co., LLC., Weight-average molecular weight: 500,000) was added instead of the PVP.

<Example 6>

A composite separation membrane according to Example 6 was obtained in the same manner as in Example 1, except that 0.714 g of polydiallyldimethylammonium chloride (manufactured by NITTOBO MEDICAL CO., LTD.) was added instead of the PVP, and the added amount of RO water was 1.892 g.

<Comparative Example 1>

A composite separation membrane according to Comparative Example 1 was obtained in the same manner as in Example 1, except that the PVP was not added, the added amount of the solution of PEGDMA was 2.13 g, and the added amount of Irgacure 2959 was 0.025 g.

<Comparative Example 2>

A composite separation membrane according to Comparative Example 2 was obtained in the same manner as in Example 1, except that 0.2 g of N-vinyl-2-pyrrolidone (manufactured by Wako Pure Chemical Industries, Ltd.) was added instead of the PVP.

In Examples 1 to 6, the occurrence of cracks was not observed in the separation function layers. By contrast, in Comparative Example 1 and Comparative Example 2, cracks were found in the separation function layers. This suggested that, with the crack inhibitor being contained in the separation function layer, the occurrence of cracks is prevented in the formation of the hydrophobic layer. N-vinyl-2-pyrrolidone used in Comparative Example 2 is a monomer of PVP, and cracks occurred in the separation function layer of the composite separation membrane of Comparative Example 2. This suggested that a polymer having a long molecular chain is suitable as the crack inhibitor. The occurrence of cracks was not observed in the separation function layers of the composite separation membranes of Example 5 and

Example 6. This suggested that a polymer having a five-membered ring or a linear polymer can be used as the crack inhibitor.

In the composite separation membrane according to Example 1, the permeance $Q_{CO2}$ was $2.31 \times 10^{-11}$, the permeance $Q_{He}$ was $1.51 \times 10^{-12}$, and the separation coefficient was 15.3. In the composite separation membrane according to Example 2, the permeance $Q_{CO2}$ was $5.63 \times 10^{-11}$, the permeance $Q_{He}$ was $4.91 \times 10^{-12}$, and the separation coefficient was 11.33. In the composite separation membrane according to Example 3, the permeance $Q_{CO2}$ was $1.81 \times 10^{-11}$, the permeance $Q_{He}$ was $1.44 \times 10^{-12}$, and the separation coefficient was 12.52. In the composite separation membrane according to Example 4, the permeance $Q_{CO2}$ was $5.36 \times 10^{-11}$, the permeance $Q_{He}$ was $5.20 \times 10^{-12}$, and the separation coefficient was 10.17. In the composite separation membrane according to Example 5, the permeance $Q_{CO2}$ was $3.09 \times 10^{-11}$, the permeance $Q_{He}$ was $2.12 \times 10^{-12}$, and the separation coefficient was 14.49. These confirmed that the composite separation membranes according to Examples 1 to 5 exhibit good gas permeability and good gas separation performance, and can separate $CO_2$ effectively.

INDUSTRIAL APPLICABILITY

The separation membrane of the present invention is used to separate carbon dioxide from other gases, and is suitably used, for example, in separating carbon dioxide from combustion exhaust gas generated in thermal power stations, steel plants, etc.

## Claims

1. A separation membrane comprising:

   a separation function layer comprising a high-molecular polymer as a matrix and an amine compound; and hydrophobic layers arranged on both faces of the separation function layer,
   the separation function layer comprising a crack inhibitor, and
   the amine compound being represented by the following formula [I] and/or [II]:

   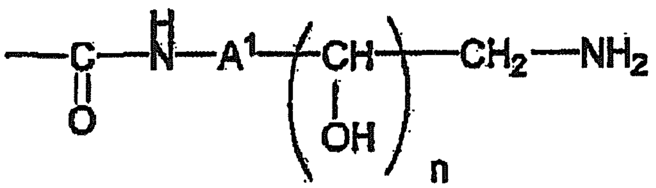

   [I]

   ,

   where $A^1$ represents a divalent organic residue having 1 to 3 carbon atoms, and n represents an integer of 0 or 1; and

   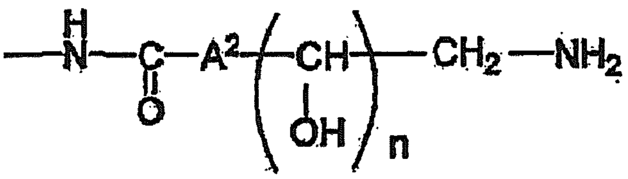

   [II]

   ,

   where $A^2$ represents a divalent organic residue having 1 to 3 carbon atoms, and n represents an integer of 0 or 1.

2. The separation membrane according to claim 1, wherein the crack inhibitor is a high-molecular compound that does not participate in a polymerization reaction of a polymerizable monomer for forming the high-molecular polymer, or the crack inhibitor is a high-molecular compound that does not participate in a crosslinking reaction of the high-molecular polymer.

3. The separation membrane according to claim 1 or 2, wherein the crack inhibitor comprises at least one selected

from polyvinylpyrrolidone, polyethylene glycol, polydiallyldimethylammonium chloride, chitosan, and a cellulose derivative.

**4.** The separation membrane according to claim 3, wherein the crack inhibitor is polyvinylpyrrolidone that is a linear polymer of N-vinyl-2-pyrrolidone.

**5.** The separation membrane according to claim 3 or 4, wherein the polyvinylpyrrolidone is contained in an amount of 2 to 20 mass% relative to the high-molecular polymer of the separation function layer.

**6.** The separation membrane according to claim 3, wherein the crack inhibitor is polyethylene glycol.

**7.** The separation membrane according to claim 3, wherein the cellulose derivative comprises at least one selected from hydroxypropion cellulose and carboxymethyl cellulose.

**8.** The separation membrane according to any one of claims 1 to 7, wherein a material forming the hydrophobic layer is a silicone elastomer.

**9.** The separation membrane according to any one of claims 1 to 8, wherein the amine compound is a polyamidoamine dendrimer.

**10.** A composite separation membrane comprising:

a porous support membrane; and
the separation membrane according to any one of claims 1 to 9 that is stacked on the porous support membrane.

**11.** A method for producing a separation membrane, comprising the steps of:

forming a high-molecular polymer by a polymerization reaction or a crosslinking reaction in the presence of an amine compound and a crack inhibitor so as to obtain a separation function layer; and
applying and drying a solution of a hydrophobic polymer on both faces of the separation function layer so as to obtain hydrophobic layers,
the amine compound being represented by the following formula [I] and/or [II]:

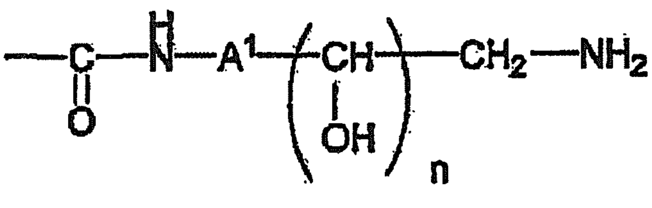

[I]

,

where $A^1$ represents a divalent organic residue having 1 to 3 carbon atoms, and n represents an integer of 0 or 1; and

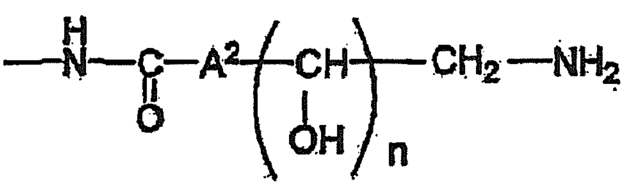

[II]

,

where $A^2$ represents a divalent organic residue having 1 to 3 carbon atoms, and n represents an integer of 0 or 1.

## INTERNATIONAL SEARCH REPORT

International application No. PCT/JP2013/005213

**A. CLASSIFICATION OF SUBJECT MATTER**

*B01D69/00*(2006.01)i, *B01D69/10*(2006.01)i, *B01D69/12*(2006.01)i, *B01D71/70* (2006.01)i, *B32B5/18*(2006.01)i, *B32B23/20*(2006.01)i, *B32B25/20*(2006.01)i, *B32B27/00*(2006.01)i, *B32B27/08*(2006.01)i, *B32B27/30*(2006.01)i,

According to International Patent Classification (IPC) or to both national classification and IPC

**B. FIELDS SEARCHED**

Minimum documentation searched (classification system followed by classification symbols)
B01D69/00, B01D69/10, B01D69/12, B01D71/70, B32B5/18, B32B23/20, B32B25/20, B32B27/00, B32B27/08, B32B27/30, B32B27/34

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
JSTPlus/JMEDPlus/JST7580(JDreamIII)

**C. DOCUMENTS CONSIDERED TO BE RELEVANT**

| Category* | Citation of document, with indication, where appropriate, of the relevant passages | Relevant to claim No. |
|---|---|---|
| A | JP 2011-104579 A (IHI Corp.), 02 June 2011 (02.06.2011), claims 1 to 5 (Family: none) | 1-11 |
| A | JP 2007-54710 A (Research Institute of Innovative Technology for the Earth), 08 March 2007 (08.03.2007), claims 1 to 9 (Family: none) | 1-11 |
| A | JP 2009-185118 A (Research Institute of Innovative Technology for the Earth), 20 August 2009 (20.08.2009), claims 1 to 30 (Family: none) | 1-11 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>28 October, 2013 (28.10.13) | Date of mailing of the international search report<br>05 November, 2013 (05.11.13) |
| Name and mailing address of the ISA/<br>Japanese Patent Office<br>Facsimile No. | Authorized officer<br><br>Telephone No. |

Form PCT/ISA/210 (second sheet) (July 2009)

**INTERNATIONAL SEARCH REPORT**

International application No. PCT/JP2013/005213

C (Continuation). DOCUMENTS CONSIDERED TO BE RELEVANT

| Category* | Citation of document, with indication, where appropriate, of the relevant passages | Relevant to claim No. |
|---|---|---|
| A | JP 2008-36463 A (Renaissance Energy Research Corp.), 21 February 2008 (21.02.2008), claims 1 to 7; paragraph [0030] (Family: none) | 1-11 |
| A | JP 2010-36123 A (Nippon Oil Corp.), 18 February 2010 (18.02.2010), claims 1 to 5 (Family: none) | 1-11 |
| P,Y | JP 2012-179514 A (Research Institute of Innovative Technology for the Earth), 20 September 2012 (20.09.2012), entire text; all drawings (Family: none) | 1-11 |

Form PCT/ISA/210 (continuation of second sheet) (July 2009)

**INTERNATIONAL SEARCH REPORT**

International application No.
PCT/JP2013/005213

Continuation of A. CLASSIFICATION OF SUBJECT MATTER
(International Patent Classification (IPC))

*B32B27/34*(2006.01)i

(According to International Patent Classification (IPC) or to both national classification and IPC)

Form PCT/ISA/210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008068238 A
- JP 2009241006 A
- JP 2010036123 A
- JP 1022003 B


### Non-patent literature cited in the description


- New Developments in Gas Separation Technology. Toray Research Center Inc. and issued by Toray Research Center Inc, 1990, 345-362
- *J. Am. Chem. Soc.,* 2000, vol. 122, 7594-7595
- *Ind. Eng. Chem. Res.,* 2001, vol. 40, 2502-2511